# EUROPEAN PATENT SPECIFICATION

(11) **EP 2 542 772 B1**
(45) Date of publication and mention of the grant of the patent: **10.04.2019**
(21) Application number: 11702237.6
(22) Date of filing: 07.02.2011
(51) Int. Cl.: F02K 1/48, F02K 3/072

(54) **GAS TURBINE ENGINE WITH FLOW MIXER**
GASTURBINENMOTOR MIT DURCHLAUFMISCHER
MOTEUR À TURBINE À GAZ AVEC MÉLANGEUR DE FLUX

(30) Priority: 03.03.2010 GB 201003497
(43) Date of publication of application: 09.01.2013
(73) Proprietor: Rolls-Royce plc, London SW1E 6AT (GB)
(72) Inventor: UDALL, Kenneth, Derby Derbyshire DE24 8BJ (GB)
(74) Representative: Rolls-Royce plc
(86) International application number: PCT/EP2011/051725
(87) International publication number: WO 2011/107320

(56) References cited:
- WO-A1-00/40851
- GB-A- 601 170
- GB-A- 2 211 247
- US-A- 4 789 304
- US-A1- 2006 112 675
- US-A1- 2008 105 488
- US-B1- 6 606 854

## Description

The present invention relates to a gas turbine engine that has an annular flow mixer for exhausting working gas from the engine.

Aircraft manufactures are under continual pressure to improve the fuel efficiency of their aircraft. It is known that open rotor gas turbine engines can provide substantial efficiency benefits.

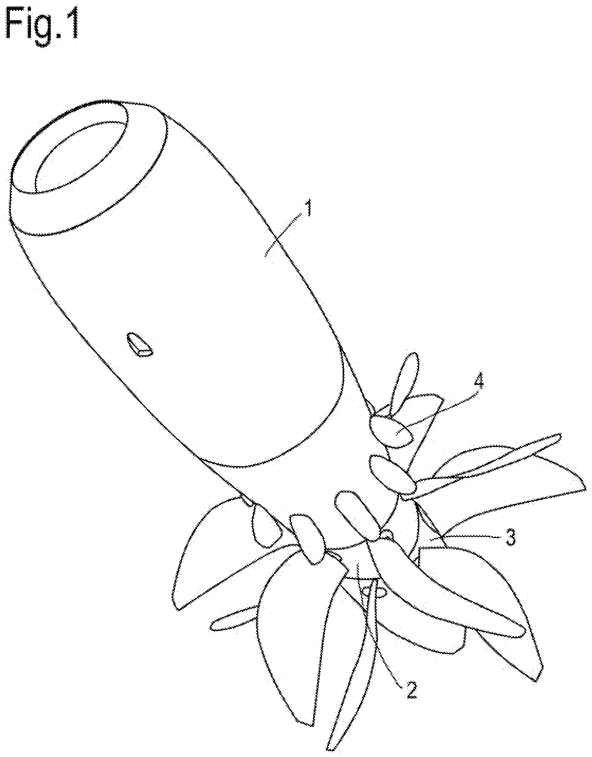

Figure 1 shows a bottom view of a PW-Allison Model 578-DX propfan demonstrator. This is a geared counter-rotation open rotor engine that incorporates a gas turbine engine 1 and a differential planetary gear system that drives two six-bladed, counter-rotating propfan rotors 2, 3. Exhaust gas from the engine is discharged by nine circumferentially-spaced, near-circular cross-section exhaust chutes 4 and is directed rearwards towards the roots of the propellers of the forward rotor 2.

Although the Model 578-DX has successfully completed test flights, there is concern about possible poor mixing effectiveness of the exhaust. The near circular section of the exhaust chutes 4 gives good control of the hot nozzle exit area and relatively low friction losses. However, for such an open rotor engine, the hot nozzle typically contributes only 2% to 3% of the cruise thrust, so the hot thrust is relatively unimportant. On the other hand, the relatively large hot nozzle exit area and relatively small hot to cold flow interface shear area may lead to poor mixing effectiveness of the hot and cold flows, with the hot plumes persisting for some distance downstream. This leads to two problems. Firstly, at start-up a plume of hot exhaust gas from a chute 4 may impinge on a propeller before rotation begins, so that the blade experiences the full exhaust temperature, rather than the mean of hot and cold flows which a rotating propeller experiences. This could exceed the medium and long term temperature capability of a composite blade, and may also be of concern to a titanium blade.

Secondly, excessive engine noise, apparently caused by the interaction of the circumferentially isolated exhaust gas plumes with the propellers of the rotors 2, 3, is a concern. Having nine plumes, six front rotor blades and six rear rotor blades all with a common factor of three, probably exacerbates the engine noise.

The present invention seeks to address these problems.

US2008/105488 A1 discloses a mixer for a bypass turbomachine, the mixer comprising a member having a sinusoidal portion at its end defining inner lobes and outer lobes, each outer lobe comprising a pair of plane radial walls spaced apart from each other in the circumferential direction and interconnected by an outer dome, each inner lobe comprising a pair of plane radial walls spaced apart from each other in the circumferential direction and connected together by an inner dome, the walls of the outer lobes being disposed to extend the walls of the inner lobes radially, the radial walls of a given outer lobe extending radially in mutually parallel directions, with these walls, when extended geometrically, defining a zone from which the axis of symmetry of the cylindrical member is excluded.

GB601170 A discloses a gas turbine plant comprising an axial flow compressor, an annular combustion chamber or group of annularly arranged combustion chambers, a turbine driving the compressor and a two-stage turbine in axial alignment and in which each stage of the turbine is direct coupled to an element of a contra-rotational pusher airscrew, the exhaust ducts finally leaving the power turbine are flared with respect to the plant axis so that either the hot gases will mix with the external air and flow therewith through the airscrew or said ducts have a large radial component so that the gases flow outside the peripheries of the airscrews.

GB2211247 A discloses an exhaust nozzle which extends from an engine nacelle and has an opening disposed at an acute angle such that the exhaust stream is blown over a length of the propeller blade. The opening is preferably of tear-drop shape and has a plurality of guide vanes disposed therein to shape the exhaust stream most effectively. By spreading the exhaust stream over the length of a propeller, mixing of the exhaust stream with ambient air is maximized, thereby lowering the temperature of the exhaust stream to tolerable levels.

US4789304 A discloses a propeller blade insulated to withstand the high temperature exhaust of a gas turbine engine. The blade has a spar, a skin covering the spar and forming a contour of the blade, and an insulating layer disposed between the spar and the skin along the portion of the blade operating within the high temperature exhaust of an engine.

WO00/40851 discloses an exhaust mixer for a gas turbine engine that reduces the visibility of hot parts. The exhaust mixer has several lobes circumferentially disposed about a centreline axis, the lobes provide inner chutes that open into a passage to direct exhaust flow as it passes though the mixer.

Accordingly, the present invention provides a gas turbine engine having a core generator providing an annular duct for the flow of working gas which exhausts from the duct through an annular flow mixer, the flow mixer having a plurality of circumferentially spaced exhaust chutes from which the working gas exits in respective exhaust plumes, the exhaust chutes being configured such that, at the discharge end of the flow mixer, a radially outer portion of each exhaust chute radially overlaps with a radially inner portion of at least one adjacent exhaust chute,
wherein the gas turbine engine has a propeller assembly rearward of the flow mixer which provides a row of propellers, the exhaust plumes impinging on the propellers, and each exhaust chute of the flow mixer forms a mouth which increases in width from the radially inner extremity to the radially outer extremity of the exhaust chute.

Advantageously, by radially overlapping the exhaust chutes and hence radially overlapping the exhaust plumes it is possible to improve the mixing of the plumes with surrounding air. This can help to reduce the peak temperature in the plumes before e.g. they impinge on a row of downstream propellers. For example, exhaust plume impingement on e.g. a stationary downstream propeller can be divided into a plurality of smaller, radially-spaced, impingements rather than a single large impingement. In the case of impingement on a stationary propeller, this can help to reduce the thermal load on the propeller, for example by allowing heat to conduct more easily away from the points of impingement. The exhaust plumes can have a relatively high hot to cold flow interface shear area which can lead to improved mixing effectiveness of the hot and cold flows.

The annular flow mixer may have any one, or to the extent that they are compatible, any combination of the following optional features.

Preferably, the exhaust chutes are further configured such that the exhaust plumes spiral around the axis of the duct as they discharge in the rearward direction of the engine. The spiralling can promote the mixing of the exhaust plumes with surrounding air to more rapidly reduce peak temperatures.

Each exhaust chute typically has a slot-like flow cross-section which leans or is angled away from the radial direction of the flow mixer. Such a cross-section facilitates the radial overlapping of neighbouring exhaust chutes, helping to reduce interactions with e.g. downstream propellers which may lead to engine noise. It also reduces the thickness of the exhaust plumes, which further promotes mixing with surrounding air to more rapidly reduce peak temperatures.

Each exhaust chute may be angled between 35 and 75 degrees, although preferably between 45 and 65 degrees. In the example described below each exhaust chute is angled at approximately 55 degrees.

Preferably, from the inlet end to the discharge end of the flow mixer, the outer extremities of the exhaust chutes expand radially outwardly. This outward expansion, particularly in combination with leant, slot-like flow cross-sections, encourages some spiralling of the exhaust plumes.

According to the present invention, at the discharge end of the flow mixer, each exhaust chute forms a mouth which increases in width from the radially inner extremity to the radially outer extremity of the exhaust chute. The width increase can help to maintain a constant mixing ratio with the surrounding air.

Preferably, the flow mixer further has a plurality of circumferentially spaced cold gas chutes which receive a flow of relatively cold gas at the inlet end of the flow mixer and discharge the cold gas at the discharge end of the flow mixer in the rearward direction of the engine in respective cold gas plumes, the cold gas chutes being configured such that, at the discharge end of the flow mixer, a radially inner portion of each cold gas chute radially overlaps with a radially outer portion of at least one adjacent cold gas chute. By radially overlapping the cold gas chutes and hence radially overlapping the cold gas plumes, the thermal load on e.g. a stationary downstream propeller, can be reduced, for example by cooling the propeller in regions adjacent points of impingement of exhaust gas plumes, thereby promoting heat conduction away from the points of impingement. The cold gas plumes can provide the majority of the surrounding air for mixing with the exhaust plumes and, by interleaving the cold gas with the exhaust plumes, efficient and rapid mixing of the hot and cold flows can be promoted.

The ratio of the cold gas mass flow rate to exhaust mass flow rate may be in the range from 0.5:1 to 4.0:1.

Typically, the cold gas chutes alternate, e.g. are interleaved, with the exhaust chutes circumferentially around the flow mixer.

Preferably, the cold gas chutes are further configured such that the cold gas plumes spiral around the axis of the duct as they discharge in the rearward direction of the engine. In particular, the cold gas plumes can spiral around the axis of the duct in an opposite direction of spiral to the exhaust plumes. This can promote efficient and rapid mixing between the exhaust and the cold gas. Also, counter-spiralling the exhaust and cold gas flows can help to reduce overall departure from axial flow.

Each cold gas chute typically has a slot-like flow cross-section which leans away from the radial direction of the flow mixer. Particularly in combination with interleaved exhaust gas chutes having leant, slot-like flow cross-sections, this arrangement promotes mixing with the exhaust plumes by increasing the hot to cold flow interface shear area.

Preferably, from the inlet end to the discharge end of the flow mixer, the cold gas chute inner extremities converge radially inwardly. This inward convergence, particularly in combination with leant, slot-like flow cross-sections, encourages the reverse spiralling of the cold gas plumes.

At the discharge end of the flow mixer, each cold gas chute may form a mouth which increases in width from the radially inner extremity to the radially outer extremity of the cold gas chute. The width increase can help to maintain a constant mixing ratio of the cold gas with the exhaust.

The flow mixer may have at least fifteen exhaust chutes. For example, for use with a downstream propeller assembly which has a row of twelve propellers, the flow mixer may have 17 to-35 exhaust chutes. The number of exhaust chutes can be selected to cut off tonal noise harmonics.

The engine may be configured to direct external air to the cold gas chutes at the inlet end of the flow mixer.

The engine may have one or more bypass ducts for conveying starting handling bleed air to the exhaust chutes at the inlet end of the flow mixer. This arrangement allows the exhaust chutes to be purged of any fuel spilt into the bottom of the annular duct due to e.g. a failed start when the combustor fails to light. The engine may direct starting handling bleed air from the compressor section of the engine to the exhaust chutes at the inlet end of the flow mixer. Particularly when the outer extremities of the exhaust chutes expand radially outwardly, a downward slope of the outer extremities of the bottom exhaust chutes can assist drainage of spilt fuel.

According to the present invention, the gas turbine engine further has a propeller assembly which is rearward of the flow mixer and which provides a row of propellers, the exhaust plumes impinging on the propellers. The gas turbine engine may further have a second propeller assembly which is rearward of the first propeller assembly and which provides a row of counter-rotating propellers.

The working gas plumes exiting two or more adjacent exhaust chutes may impinge on one propeller simultaneously.

Each chute may be angled from a radial line and in the opposite direction to the direction of rotation of the propeller assembly.

Each propeller may be angled from a radial line and each chute is angled from a radial line and in the opposite direction to the propeller's angle.

Each propeller may be curved from a radial line and each chute is angled from a radial line and in the opposite direction to the propeller's curvature.

Embodiments of the invention will now be described by way of example with reference to the accompanying drawings in which:
Figure 1 shows a bottom view of a PW-Allison Model 578-DX propfan demonstrator;
Figure 2 shows a side view of a propfan engine having a flow mixer according to the present invention;
Figure 3 shows a view from the rear of a portion of the flow mixer of Figure 2; and
Figure 4 shows schematically a view of the discharge end of the flow mixer of Figure 2, superimposed with (a) the corresponding discharge ends of the exhaust chutes of the Model 578-DX engine of Figure 1 and (b) the positions of the propellers of the forward rotor of the propfan of Figure 2.

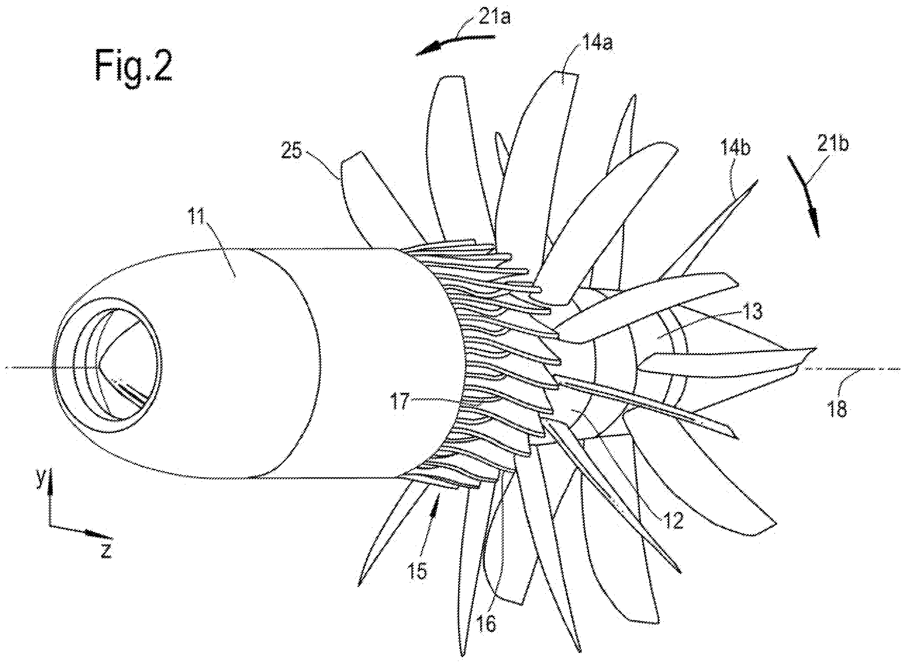

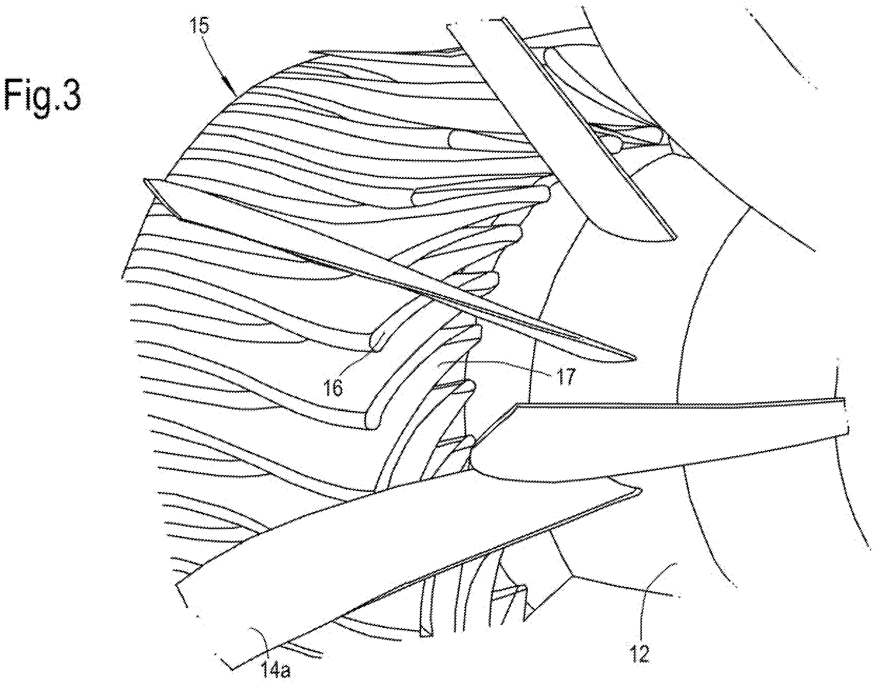

Figure 2 shows a side view of a propfan engine having a gas turbine engine 11 and forward 12 and rear 13 counter-rotating propfan rotors, each carrying a number of propeller blades 14a, 14b. Different numbers of blades may be present on the forward and rear rotors, as shown. The gas turbine engine has an internal annular duct for the flow of working gas and is generally configured around a rotational axis 18. The forward 12 and rear 13 counter-rotating propfan rotors rotates in the directions shown by arrows 21a and 21b respectively. An annular flow mixer 15 positioned forward of the rotors exhausts the working gas from the duct. Figure 3 shows a view from the rear of a portion of the flow mixer.

The flow mixer 15 is formed from sheet material having a multi-lobed configuration, each lobe providing a respective exhaust chute 16 from which a plume of hot exhaust gas discharges rearwardly from the engine 11. The exhaust chutes are circumferentially spaced around the flow mixer. Each exhaust chute is formed by two facing walls of the sheet material to provide a slot-like flow cross-section. From the inlet end of the flow mixer adjacent the engine to the discharge end of the flow mixer adjacent the forward rotor 12 the exhaust chutes expand radially outwardly. Each exhaust chute forms a mouth at the discharge end of the flow mixer, the width of the flow cross-section at the mouth being wider at the radially outer end of the mouth than at the radially inner end of the mouth so that a higher proportion of the overall exhaust gas flow rate is at radially outer positions than at radially inner positions.

The slot-like flow cross-sections are angled away from a radial direction of the flow mixer 15. This, in combination with the radially outward expansion of the crests of the lobes which form the outer extremities of the exhaust chutes 16, and a corresponding inward contraction of the troughs of the lobes, causes the exhaust plumes which exit from the mouths of the exhaust chutes to spiral around the axis of the engine 11 to a relatively small but controllable degree.

Between each pair of exhaust chutes 16, facing walls of the sheet material of the flow mixer 15 form a cold gas chute 17, again with a slot-like flow cross-section. Thus cold gas chutes alternate with exhaust chutes around the circumference of the flow mixer. The cold gas for the cold gas chutes is supplied at the inlet of the flow mixer from the freestream air flowing around the nacelle of the engine 11.

Each cold gas chute forms a mouth at the discharge end of the flow mixer, the width of the flow cross-section at the mouth being wider at the radially outer end of the mouth than at the radially inner end of the mouth so that a higher proportion of the overall exhaust gas flow rate is at radially outer positions than at radially inner positions. The widening of the radially outer ends of the mouths of both the exhaust and the cold gas chutes can help to maintain a constant mixing ratio between the exhaust and the cold gas at different radial positions.

Like the exhaust chutes 16, the slot-like flow cross-sections of the cold gas chutes 17 are angled away from the radial directions, which in combination with the radially inward expansion of the inner extremities of the cold gas chutes, causes the cold gas plumes which exit from the mouths of the cold gas chutes to spiral to a relatively small but controllable degree around the axis of the engine 11, but in the opposite direction to the exhaust plumes.

The flow mixer 15 is designed to provide a cold flow to hot exhaust flow mass flow rate mixing ratio of around 2.5:1 (the precise ratio may vary with e.g. temperature, flight point etc.). However, ratios in the range from 0.5:1 to 4.0:1 may be reasonable, with lower ratios being suitable for titanium propellers and higher ratios for composite propellers.

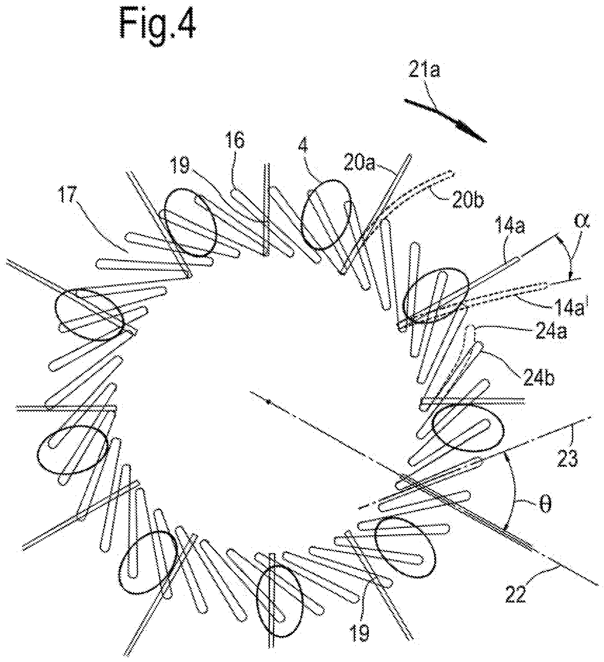

Figure 4 shows schematically a view of the discharge end of the flow mixer, superimposed with (a) the corresponding discharge ends of the exhaust chutes 4 of the Model 578-DX engine of Figure 1 and (b) the positions of the leading edges (referenced 25 in Figure 2) of the propeller blades 14a of the forward rotor 12. The leaning or angling of the flow cross-sections away from the radial direction causes (a) the radially outer portion of each exhaust chute 16 to radially overlap with the radially inner portions of the next two exhaust chutes in the anti-clockwise direction (i.e. the direction of spiral of the exhaust plumes), and (b) the radially outer portion of each cold gas chute 17 to radially overlap with radially inner portions of the next two cold gas chutes in the anticlockwise direction. Thus, even if there were no mixing between the exhaust and the cold gas plumes, when the rotors are stationary only narrow bands of exhaust would impinge on each propeller, the narrow bands being separated by bands of cold gas. A metallic propeller, or a metallic protective cuff on a composite propeller, can thus safely conduct the heat away from regions within the hot exhaust bands to regions within the cooled bands. In contrast, exhaust plumes from the exhaust chutes 4 of the Model 578-DX engine can impinge on some propellers over a much wider region, leading to possible thermal degradation of the material of the propeller. The total radial height of hot plume impingement on the propellers from the exhaust chutes 16 is about 55 mm, which is only about 20% of the maximum radial height of the hot plume impingent on the propellers from the exhaust chutes 4.

In practice, however, the exhaust and cold gas plumes begin mixing before impinging on the propeller blades 14a of the forward rotor 12, the mixing being promoted by the relatively high interface shear area between the interleaved exhaust and the cold gas flows, and the relatively narrow thicknesses of the exhaust and the cold gas flows. The mixing is further promoted by the relatively light counter spiralling of the exhaust and cold gas plumes, which may produce an included mixing angle between the exhaust and cold gas plumes of about 14°. The peak exhaust chute temperature should be quenched by cold gas flow mixing before impingement on the leading edge of the propeller blades 14a. The wider cold gas chute flow may mix out in the front rotor length. In this way, it may even be possible to avoid using metallic protective cuffs on composite propellers.

The counter spiralling of the exhaust and cold gas plumes can avoid or minimise departure from axial flow for the combined exhaust and cold gas flows. However, should a net swirl at the propeller blades 14a be beneficial, then the configuration of the flow mixer shape can be adjusted accordingly.

One advantage of the configuration described herein is that an overlap area 19 of an axial projection of a propeller blade 14a onto the exhaust chute 16 is minimised so that the least amount of working gases impinge on the propellers. Whilst in one form the configuration is defined as a radial line 22 intersecting two or more angled chutes 16 simultaneously, the shape of one or both the propeller and chute may be further arranged so that the overlap area is further reduced.

While an axial projection of a propeller blade 14a overlaps at least two adjacent exhaust chutes 16 simultaneously it is preferable although not essential, that each chute (centre-line 23) is angled θ from a radial line 22 and in the opposite direction to the direction of rotation 21 of the propeller assembly. Where each propeller blade 14a' is angled α from a radial line, each chute is also angled from a radial line 22 and in the opposite direction to the propeller blade's angle. Furthermore, where each propeller blade 20a, 20b is curved from the radial line, each chute is angled from the radial line 22 and in the opposite direction to the propeller blade's curvature. Each chute may also be curved 24a, 24b to further help reduce the overlap area 19.

It should be appreciated that many different configurations in which any one or more of the angle of the chutes, the curvature of the chutes, the angle of the propellers and the curvature of the propellers may be arranged to minimise the overlap area.

Another advantage of breaking the exhaust into a greater number of plumes is that the net exhaust chute/propeller blade tonal interaction can be divided into more numerous, but smaller, interactions (e.g. 3 exhaust plumes per blade). This can help to reduce tonal noise. For example, rapid quenching by the cold gas plumes of the relatively thin exhaust plumes can even out density and pressure variations, as well as temperature variations, leading to quietening of the rotors 12, 13.

For tonal noise reduction, the preferred number of the exhaust chutes 16 can depend, amongst other things, on the number of propellers on each rotor. For the bladed rotors 12, 13, preferred numbers of the exhaust chutes may be in the range 17 to 35. The number can be selected to cut off particular tonal noise harmonics associated with the rotors.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A gas turbine engine (11) having a core generator providing an annular duct for the flow of working gas which exhausts from the duct through an annular flow mixer (15), the flow mixer (15) having a plurality of circumferentially spaced exhaust chutes (16) from which the working gas exits in respective exhaust plumes, the exhaust chutes being configured such that, at the discharge end of the flow mixer, a radially outer portion of each exhaust chute (16) radially overlaps with a radially inner portion of at least one adjacent exhaust chute,
**characterised in that** the gas turbine engine has a propeller assembly rearward of the flow mixer which provides a row of propellers (14a), the exhaust plumes impinging on the propellers, and each exhaust chute (16) of the flow mixer (15) forms a mouth which increases in width from the radially inner extremity to the radially outer extremity of the exhaust chute.

2. A gas turbine engine according to claim 1, wherein, each exhaust chute (16) has a slot-like flow cross-section which is angled away from the radial direction of the flow mixer.

3. A gas turbine engine according to claim 2, wherein, each exhaust chute (16) has a slot-like flow cross-section which is angled between 35 and 75 degrees.

4. A gas turbine engine according to claim 2, wherein, each exhaust chute (16) has a slot-like flow cross-section which is angled between 45 and 65 degrees.

5. A gas turbine engine according to claim 2, wherein, each exhaust chute (16) has a slot-like flow cross-section which is angled at approximately 55 degrees.

6. A gas turbine engine according to any one of the previous claims, wherein, from the inlet end to the discharge end of the flow mixer (15), the outer extremities of the exhaust chutes (16) expand radially outwardly.

7. A gas turbine engine according to any one of the previous claims, wherein the flow mixer (15) further has a plurality of circumferentially spaced cold gas chutes (17) which receive a flow of relatively cold gas at the inlet end of the flow mixer and discharge the cold gas at the discharge end of the flow mixer in the rearward direction of the engine in respective cold gas plumes, the cold gas chutes (17) being configured such that, at the discharge end of the flow mixer, a radially inner portion of each cold gas chute radially overlaps with a radially outer portion of at least one adjacent cold gas chute.

8. A gas turbine engine according to claim 7, wherein the cold gas chutes (17) alternate with the exhaust chutes (16) circumferentially around the flow mixer (15).

9. A gas turbine engine according to any one of the previous claims, where the propeller assembly provides a row of propellers and wherein the working gas plumes exiting two or more adjacent exhaust chutes (16) impinge on one propeller simultaneously.

10. A gas turbine engine according to any one of the previous claims where the propeller assembly provides a row of propellers and the exhaust chutes (16) are configured such that, at the discharge end of the flow mixer an axial projection of a propeller overlaps at least two adjacent exhaust chutes (16) simultaneously.

11. A gas turbine engine according to claim 10, wherein each exhaust chute (16) is angled from a radial line (22) and in the opposite direction to the direction of rotation (21) of the propeller assembly.

12. A gas turbine engine according to claim 10 or 11, wherein the blade of each propeller (14a') is angled from a radial line and each exhaust chute (16) is angled from a radial line (22) and in the opposite direction to the propeller blade's angle.

13. A gas turbine engine according to claim 10 or 12, wherein the blade of each propeller (20a, 20b) is curved from a radial line and each exhaust chute (16) is angled from a radial line (22) and in the opposite direction to the propeller blade's curvature.

## Patentansprüche

1. Gasturbinentriebwerk (11), aufweisend einen Kerngenerator, der einen ringförmigen Kanal für die Strömung von Arbeitsgas bereitstellt, das aus dem Kanal durch einen ringförmigen Strömungsmischer (15) ausströmt, wobei der Strömungsmischer (15) eine Vielzahl von umfangsmäßig beabstandeten Abgasrampen (16) aufweist, aus welchen das Arbeitsgas in jeweiligen Abgasstrahlen austritt, wobei die Abgasrampen derart gestaltet sind, dass am Auslassende des Strömungsmischers ein radial äußerer Teil von jeder Abgasrampe (16) mit einem radial inneren Teil von mindestens einer angrenzenden Abgasrampe radial überlappt,
**dadurch gekennzeichnet, dass** das Gasturbinentriebwerk eine Propelleranordnung rückwärtig des Strömungsmischers aufweist, die eine Reihe von Propellern (14a) bereitstellt, wobei die Abgasstrahlen auf die Propeller auftreffen,
und wobei jede Abgasrampe (16) des Strömungsmischers (15) eine Öffnung bildet, die in Breite von dem radial inneren Ende zu dem radial äußeren Ende der Abgasrampe zunimmt.

2. Gasturbinentriebwerk nach Anspruch 1, wobei jede Abgasrampe (16) einen schlitzähnlichen Strömungsquerschnitt aufweist, der von der radialen Richtung des Strömungsmischers abgewinkelt ist.

3. Gasturbinentriebwerk nach Anspruch 2, wobei jede Abgasrampe (16) einen schlitzähnlichen Strömungsquerschnitt aufweist, der zwischen 35 und 75 Grad gewinkelt ist.

4. Gasturbinentriebwerk nach Anspruch 2, wobei jede Abgasrampe (16) einen schlitzähnlichen Strömungsquerschnitt aufweist, der zwischen 45 und 65 Grad gewinkelt ist.

5. Gasturbinentriebwerk nach Anspruch 2, wobei jede Abgasrampe (16) einen schlitzähnlichen Strömungsquerschnitt aufweist, der bei etwa 55 Grad gewinkelt ist.

6. Gasturbinentriebwerk nach einem der vorhergehenden Ansprüche, wobei, vom Einlassende zum Auslassende des Strömungsmischers (15), sich die äußeren Enden der Abgasrampen (16) radial nach außen erweitern.

7. Gasturbinentriebwerk nach einem der vorhergehenden Ansprüche, wobei der Strömungsmischer (15) ferner eine Vielzahl von umfangsmäßig beabstandeten Kaltgasrampen (17) aufweist, die einen Strom von relativ kaltem Gas am Einlassende des Strömungsmischers empfangen und das Kaltgas am Auslassende des Strömungsmischers in der rückwärtigen Richtung des Triebwerks in jeweiligen Kaltgasstrahlen ablassen, wobei die Kaltgasrampen (17) derart gestaltet sind, dass, am Auslassende des Strömungsmischers, ein radial innerer Teil von jeder Kaltgasrampe mit einem radial äußeren Teil von mindestens einer angrenzenden Kaltgasrampe radial überlappt.

8. Gasturbinentriebwerk nach Anspruch 7, wobei die Kaltgasrampen (17) mit den Abgasrampen (16) umfangsmäßig um den Strömungsmischer (15) herum alternieren.

9. Gasturbinentriebwerk nach einem der vorhergehenden Ansprüche, wobei die Propelleranordnung eine Reihe von Propellern bereitstellt und wobei die aus zwei oder mehr angrenzenden Abgasrampen (16) austretenden Arbeitsgasstrahlen gleichzeitig auf einen Propeller auftreffen.

10. Gasturbinentriebwerk nach einem der vorhergehenden Ansprüche, wobei die Propelleranordnung eine Reihe von Propellern bereitstellt und die Abgasrampen (16) derart gestaltet sind, dass am Auslassende des Strömungsmischers eine axiale Projektion eines Propellers mindestens zwei angrenzende Abgasrampen (16) gleichzeitig überlappt.

11. Gasturbinentriebwerk nach Anspruch 10, wobei jede Abgasrampe (16) gegenüber einer radialen Linie (22) und in der entgegengesetzten Richtung zu der Rotationsrichtung (21) der Propelleranordnung angewinkelt ist.

12. Gasturbinentriebwerk nach Anspruch 10 oder 11, wobei das Blatt von jedem Propeller (14a') gegenüber einer radialen Linie angewinkelt ist und jede Abgasrampe (16) gegenüber einer radialen Linie (22) und in der entgegengesetzten Richtung zu dem Propellerblattwinkel angewinkelt ist.

13. Gasturbinentriebwerk nach Anspruch 10 oder 12, wobei das Blatt von jedem Propeller (20a, 20b) gegenüber einer radialen Linie gekrümmt ist und jede Abgasrampe (16) gegenüber einer radialen Linie (22) und in der entgegengesetzten Richtung zu der Propellerblattkrümmung angewinkelt ist.

## Revendications

1. Turbine à gaz (11) ayant un générateur central fournissant un conduit annulaire pour le flux de gaz actif qui s'échappe du conduit par un mélangeur de flux annulaire (15), le mélangeur de flux (15) ayant une pluralité de glissières d'échappement espacées sur la circonférence (16) par lesquelles le gaz actif sort en traînées d'échappement respectives, les glissières d'échappement étant configurées de telle sorte que, à l'extrémité décharge du mélangeur de flux, une partie radialement extérieure de chaque glissière d'échappement (16) chevauche radialement une partie radialement intérieure d'au moins une glissière d'échappement contiguë,
**caractérisée en ce que** la turbine à gaz a un ensemble d'hélices en arrière du mélangeur de flux, qui fournit une rangée d'hélices (14a), les traînées d'échappement frappant les hélices,
et chaque glissière d'échappement (16) du mélangeur de flux (15) forme un orifice qui augmente de largeur de l'extrémité radialement intérieure à l'extrémité radialement extérieure de la glissière d'échappement.

2. Turbine à gaz selon la revendication 1, dans laquelle chaque glissière d'échappement (16) a une section transversale de flux en forme de fente qui s'écarte obliquement de la direction radiale du mélangeur de flux.

3. Turbine à gaz selon la revendication 2, dans laquelle chaque glissière d'échappement (16) a une section transversale de flux en forme de fente qui forme un angle entre 35 et 75 degrés.

4. Turbine à gaz selon la revendication 2, dans laquelle chaque glissière d'échappement (16) a une section transversale de flux en forme de fente qui forme un angle entre 45 et 65 degrés.

5. Turbine à gaz selon la revendication 2, dans laquelle chaque glissière d'échappement (16) a une section transversale de flux en forme de fente qui forme un angle d'environ 55 degrés.

6. Turbine à gaz selon l'une quelconque des revendications précédentes, dans laquelle, de l'extrémité admission à l'extrémité décharge du mélangeur de flux (15), les extrémités extérieures des glissières d'échappement (16) s'agrandissent radialement vers l'extérieur.

7. Turbine à gaz selon l'une quelconque des revendications précédentes, dans laquelle le mélangeur de flux (15) a en outre une pluralité de glissières à gaz froid (17) espacées sur la circonférence qui reçoivent un flux de gaz relativement froid à l'extrémité admission du mélangeur de flux et déchargent le gaz froid à l'extrémité décharge du mélangeur de flux dans la direction arrière de la turbine en traînées de gaz froid respectives, les glissières à gaz froid (17) étant configurées de telle sorte que, à l'extrémité décharge du mélangeur de flux, une partie radialement intérieure de chaque glissière à gaz froid chevauche une partie radialement extérieure d'au moins une glissière à gaz froid contiguë.

8. Turbine à gaz selon la revendication 7, dans laquelle les glissières à gaz froid (17) alternent avec les glissières d'échappement (16) sur la circonférence du mélangeur de flux (15).

9. Turbine à gaz selon l'une quelconque des revendications précédentes, où l'ensemble d'hélices fournit une rangée d'hélices et dans laquelle les traînées de gaz actif sortant d'au moins deux glissières d'échappement contiguës (16) frappent simultanément une hélice.

10. Turbine à gaz selon l'une quelconque des revendications précédentes, dans laquelle l'ensemble d'hélices fournit une rangée d'hélices et les glissières d'échappement (16) sont configurées de telle sorte que, à l'extrémité décharge du mélangeur de flux, une saillie axiale d'une hélice chevauche simultanément au moins deux glissières d'échappement contiguës (16).

11. Turbine à gaz selon la revendication 10, dans laquelle chaque glissière d'échappement (16) est inclinée par rapport à une ligne radiale (22) et dans la direction opposée au sens de rotation (21) de l'ensemble d'hélices.

12. Turbine à gaz selon la revendication 10 ou 11, dans laquelle la pale de chaque hélice (14a') est inclinée par rapport à une ligne radiale et chaque glissière d'échappement (16) est inclinée par rapport à une ligne radiale (22) et dans la direction opposée à l'angle de la pale d'hélice.

13. Turbine à gaz selon la revendication 10 ou 12, dans laquelle la pale de chaque hélice (20a, 20b) est incurvée par rapport à une ligne radiale et chaque glissière d'échappement (16) est inclinée par rapport à une ligne radiale (22) et dans la direction opposée à la courbure de la pale d'hélice.
